# EUROPEAN PATENT APPLICATION

(11) **EP 4 507 292 A1**
(43) Date of publication of application: **12.02.2025**
(21) Application number: 24193422.3
(22) Date of filing: 07.08.2024
(51) Int. Cl.: H04N 7/14, H04N 23/661, H04N 23/69, H04N 23/695

(54) **IMAGE CONTROL METHOD, IMAGE CONTROL APPARATUS, AND NON-TRANSITORY COMPUTER-READABLE STORAGE MEDIUM STORING PROGRAM**

(30) Priority: 09.08.2023 JP 2023129793
(71) Applicant: Yamaha Corporation, Hamamatsu-shi, Shizuoka 430-8650 (JP)
(72) Inventor: OIZUMI, Yoshifumi, Hamamatsu-shi, 430-8650 (JP); SENOO, Takeshi, Hamamatsu-shi, 430-8650 (JP); YAMANE, Akio, Hamamatsu-shi, 430-8650 (JP)
(74) Representative: Pritzlaff, Stefanie Lydia

(57) **Abstract**

An image control method includes determining a mute operation, sending control information to switch a first state and a second state, to a camera (30), based on the determination result, and causing the camera (30) that outputs first image information in the first state and outputs second image information in the second state to output, based on the control information, the first image information or the second image information.

## Description

### TECHNICAL FIELD

An embodiment of the present disclosure relates to an image control method, an image control apparatus, and a program.

### BACKGROUND

Japanese Unexamined Patent Application Publication No. 2022-16997 discloses an information processing method that, in a case in which it is determined that a user is in an utterance state, outputs fast-forward image data of the user that is obtained by fast-forwarding image data of the user prior to a predetermined time, among buffered image data, to other users.

The information processing method of Japanese Unexamined Patent Application Publication No. 2022-16997 is hard to convey an intention not to talk or a desire to talk, to other users, since the entire screen display does not change whether the microphone is muted on or muted off.

### SUMMARY

In view of the foregoing, an embodiment of the present disclosure is directed to provide an image control method that is able to clearly convey an intention not to talk or a desire to talk, to a conference participant.

An image control method includes determining a mute operation, sending control information to switch a first state and a second state to a camera, based on the determination result, and causing the camera that outputs first image information in the first state and outputs second image information in the second state to output, based on the control information, the first image information or the second image information.

According to an embodiment of the present disclosure, an intention not to talk or a desire to talk is able to be clearly conveyed to a conference participant.

### BRIEF DESCRIPTION OF THE DRAWINGS

FIG. 1 is an elevation schematic diagram of an interior of a room in which an image control system is installed.
FIG. 2 is a block diagram showing a configuration of the image control system.
FIG. 3 is a flowchart showing an operation of the image control system.
FIG. 4 is a diagram showing an example of first image information P1 to be outputted in a first state.
FIG. 5 is a diagram showing an example of second image information P2 to be outputted in a second state.
FIG. 6 is a block diagram showing a configuration of an image control system according to a first modification.
FIG. 7 is a flowchart showing an operation of the image control system according to the first modification.
FIG. 8 is a flowchart showing an operation of an image control system according to a second modification.
FIG. 9 is a block diagram showing a configuration of an image control system according to a third modification.
FIG. 10 is a flowchart showing an operation of the image control system according to the third modification.
FIG. 11 is a block diagram showing a configuration of an image control system according to a fourth modification.
FIG. 12 is a flowchart showing an operation of the image control system according to the fourth modification.

### DETAILED DESCRIPTION

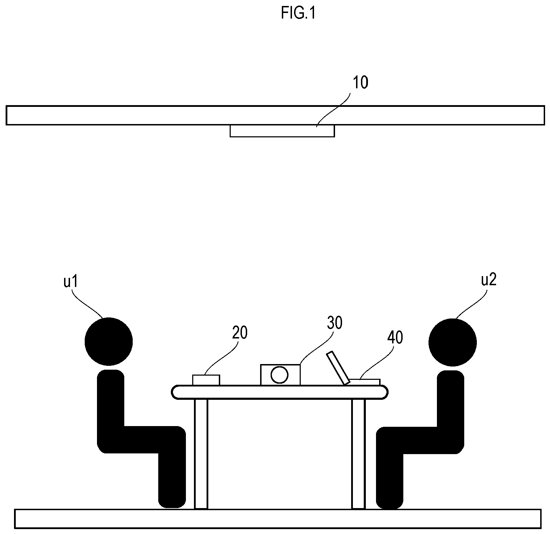

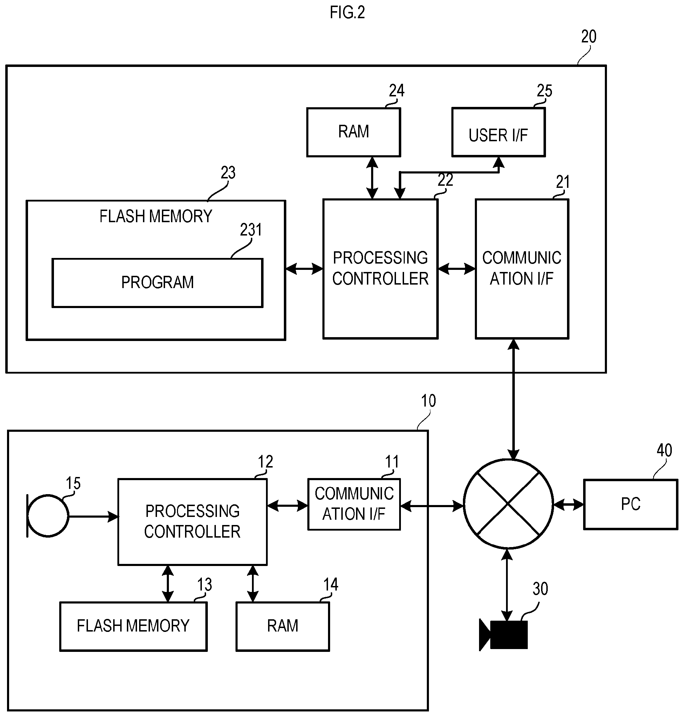

FIG. 1 is an elevation schematic diagram of an interior of a room in which an image control system is installed. FIG. 2 is a block diagram showing a configuration of the image control system. The image control system includes a microphone 10, a controller 20, a camera 30, and a personal computer (PC) 40. The microphone 10, the controller 20, the camera 30, and the PC 40 are connected through a network.

The microphone 10 is installed on a ceiling in a room. The microphone 10 has a housing having a thin rectangular parallelepiped shape. The controller 20 and the camera 30 are installed on a desk.

The desk is installed directly under the housing of the microphone 10. In the example of FIG. 1, a plurality of users (users u1 and u2) are present around the desk.

The camera 30 obtains an image of a user. Predetermined signal processing is performed on a video signal according to the obtained image, and the video signal on which the signal processing has been performed, is sent to the PC 40. The camera 30 performs framing processing such as pan, tilt, or zoom, for example.

The microphone 10 obtains a voice of the user. The microphone 10 includes a communication interface (I/F) 11, a processing controller 12, a flash memory 13, a RAM 14, and a microphone unit 15.

The processing controller 12 reads out an operating program from the flash memory 13 to the RAM 14 and collectively controls operations of the microphone 10. It is to be noted that the program does not need to be stored in the flash memory 13 of the own apparatus. The processing controller 12 may download the program each time from a server or the like, for example, and may read out the program to the RAM 14.

The processing controller 12 functions as a processor that processes an audio signal. The processing controller 12 performs predetermined signal processing on the audio signal obtained by the microphone unit 15. The microphone unit 15 is an array microphone that has a plurality of microphone units, for example. The processing controller 12 performs directivity processing of beamforming. The beamforming is processing to arrange a phase in a direction of a talker by delay sum processing and forms a sound collection beam having increased sensitivity in the direction of the talker, for example.

The processing controller 12 may obtain direction information on the voice of a talker and perform processing to direct the sound collection beam in the direction of the talker. The processing controller 12 analyzes the audio signal obtained from a plurality of microphones in the microphone unit 15 and estimates a voice arrival direction. The method of analyzing the audio signal may be any method such as a cross-correlation method, a delay sum (Delay-and-Sum) method, or a MUSIC (Multiple Signal Classification) method. In the cross-correlation method, the processing controller 12 calculates a cross correlation of audio signals of the plurality of microphones, for example. The processing controller 12 obtains a cross-correlation peak of audio signals of certain two microphones, for example. The processing controller 12 further obtains a cross-correlation peak of audio signals of two different microphones. The processing controller 12 estimates the voice arrival direction based on of a plurality of cross-correlation peaks calculated in such a manner. In other words, the processing controller 12 selects two or more sets of the plurality of microphones and obtains the plurality of cross-correlation peaks. The estimated voice arrival direction is represented by a space vector, for example.

The processing controller 12 sends the audio signal on which the signal processing has been performed, to the PC 40 through the communication I/F 11. The PC 40 is connected to another information processing apparatus in a remote place through the network such as the Internet. The PC 40 sends the audio signal received from the microphone 10 and the video signal received from the camera 30 to the information processing apparatus on a far-end side. The PC 40 may display the video signal received from the camera 30 on a display (not shown) of the own apparatus.

In addition, the PC 40 receives a video signal and an audio signal from the information processing apparatus on the far-end side. The PC 40 outputs the received video signal on the not-shown display. In addition, the PC 40 outputs the received audio signal to a not-shown speaker. As a result, the image control system functions as a component of a remote conference system for holding a remote conference.

The controller 20 is an example of the image control apparatus of the present disclosure and is a remote controller for operating the microphone 10 or the camera 30. The controller 20 includes a communication I/F 21, a processing controller 22, a flash memory 23, a RAM 24, and a user I/F 25.

The processing controller 22 reads out an operating program 231 from the flash memory 23 to the RAM 24 and collectively controls operations of the controller 20. It is to be noted that the program does not need to be stored in the flash memory 23 of the own apparatus. The processing controller 22 may download the program each time from a server or the like, for example, and may read out the program to the RAM 24.

The processing controller 22 receives an operation by a user through the user I/F 25. The user I/F 25 has at least a mute button. However, the user I/F 25 may include an operation element such as a volume change button or a power button.

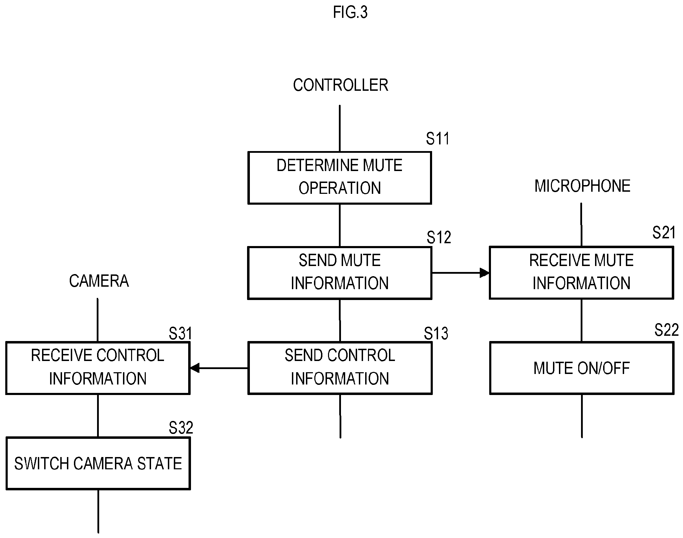

FIG. 3 is a flowchart showing an operation of the image control system. The processing controller 22 of the controller 20 first determines a mute operation (S11). The processing controller 22 sends mute information to the microphone 10 based on a determination result (S12). The mute operation is received through the user I/F 25. The mute operation includes a mute-on operation and a mute-off operation. The processing controller 22, in a case of determining the mute-on operation, sends mute-on information to the microphone 10 as the mute information. The processing controller 22, in a case of determining the mute-off operation, sends mute-off information to the microphone 10 as the mute information.

The microphone 10 receives the mute information (S21). The microphone 10, in a case of receiving the mute-on information, stops an output of the audio signal obtained by the microphone unit 15 and changes into a mute state, in a case of receiving the mute-off information, resumes the output of the audio signal obtained by the microphone unit 15 and cancels the mute state.

The processing controller 22 of the controller 20 sends control information to switch a first state and a second state to the camera 30 based on the determination result (S13). The processing controller 22, in the case of determining the mute-on operation, sends the control information to switch to the first state, to the camera 30, and, in the case of determining the mute-off operation, sends the control information to switch to the second state, to the camera 30.

The camera 30 receives the control information (S31). The camera 30 switches a camera state based on the control information (S32). The camera state includes the first state in which first image information is outputted and the second state in which second image information is outputted.

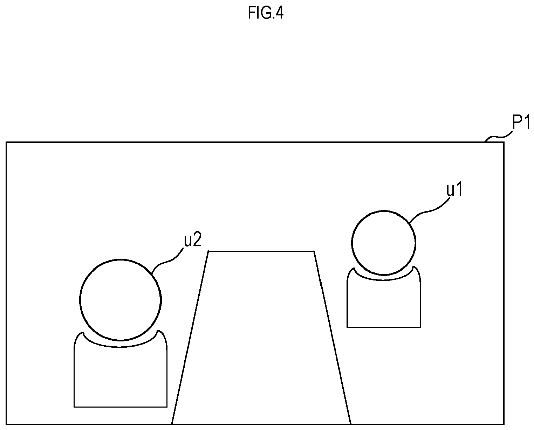

FIG. 4 is a diagram showing an example of the first image information P1 to be outputted in the first state. The first state corresponds to a predefined reference state. The reference state is, for example, a whole captured state in which the whole of the plurality of users is captured. In the example of FIG. 4, the first image information P1 is framing-processed so that both images of the user u1 and the user u2 may be included.

Alternatively, the reference state may correspond to a state on which an image of a specific user is focused. The specific user is a chairperson who facilitates a conference. The specific user is preset by the PC 40. Alternatively, the reference state may be an initial state in which the framing processing such as pan, tilt, and zoom, for example, is not performed.

The second state is a state in which the framing processing such as pan, tilt, and zoom, for example, is performed and the talker is focused on. As an example, the camera 30 performs processing to recognize the face of the talker by a predetermined model using a neural network or the like, for example. The camera 30 performs pan, tilt, and zoom so that the image of the recognized talker may be in the center of a screen and so that an occupancy rate of the image of the talker in the screen may be a predetermined rate (50%, for example).

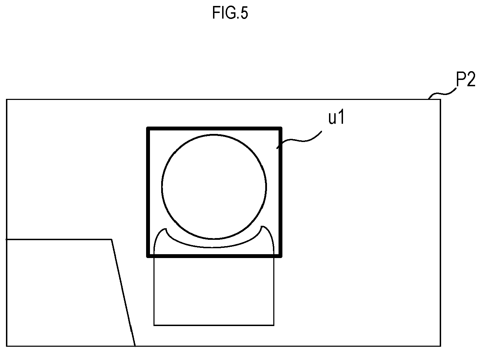

FIG. 5 is a diagram showing an example of the second image information P2 to be outputted in the second state. In the example of FIG. 5, the camera 30 recognizes the user u1 as a talker. The second image information P2 is frame-processed so that the occupancy rate of the image of the user u1 in the screen may be 50%.

It is to be noted that the camera 30 may receive the direction information on the voice of the talker that the microphone 10 obtains, and may perform the framing processing based on the direction information. In addition, the camera 30 may perform processing to mask an image of a person other than the talker or an image of a person who has not participated in a conference in the second state.

As described above, the image control system according to the present embodiment changes the camera state of the camera 30 in conjunction with the mute button of the controller 20. In a case in which a user performs the mute-on operation, the first image information that the camera 30 outputs is an image obtained by capturing the whole users. In a case in which a user performs the mute-off operation, the second image information that the camera 30 outputs is an image that focuses on a talker (the user u1 in the example of FIG. 5).

The first image information and the second image information are sent to the information processing apparatus on the far-end side through the PC 40. The first image information or the second image information is displayed on a display of the information processing apparatus on the far-end side. Alternatively, the PC 40 may display the first image information and the second image information on the display (not shown) of the own apparatus.

Normally, a mute-off state and a mute-on state are displayed on a GUI of software of the remote conference system for holding a remote conference. Therefore, as a comparative example, in a case in which the camera state does not change even when the user performs the mute operation, for example, a user of the information processing apparatus on the far-end side is unlikely to notice a change from mute-on to mute-off and from mute-off to mute-on.

However, in the image control system according to the present embodiment, in the case in which the user performs the mute-on operation, the image of the camera 30 is the image obtained by capturing the whole users. A user who looks at the image obtained by capturing the whole users can intuitively understand that nobody wants to talk. In the image control system according to the present embodiment, in the case in which the user performs the mute-off operation, the image of the camera 30 is the image that focuses on a talker (the user u1 in the example of FIG. 5). In addition, a user who looks at an enlarged image of the user u1 can intuitively understand that the user u1 has an intention to want to talk.

In such a manner, a user of the image control system according to the present embodiment can gain a new customer experience of being able to clearly convey an intention not to talk or a desire to talk, to other conference participants.

### (First Modification)

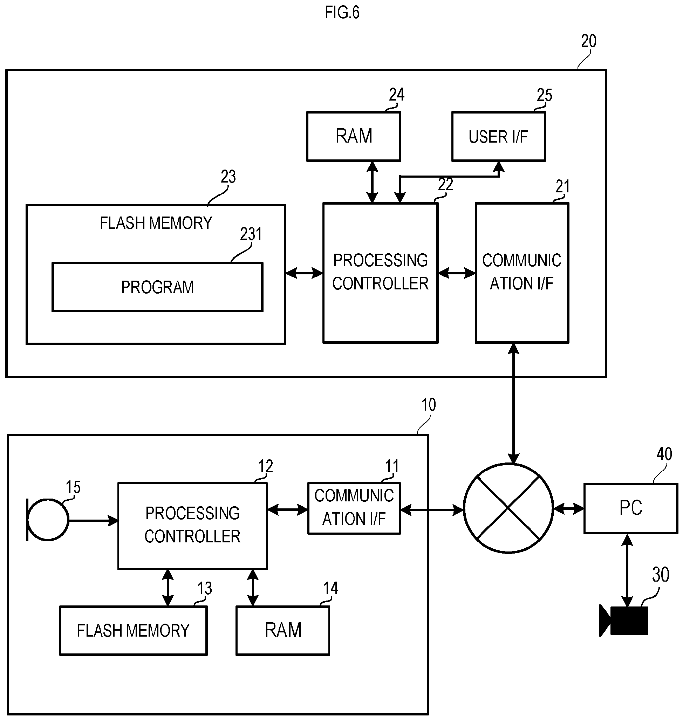

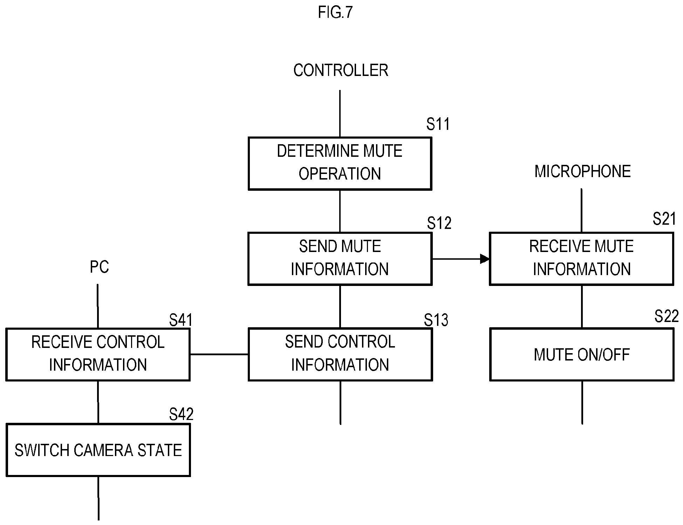

FIG. 6 is a block diagram showing a configuration of an image control system according to a first modification. The same reference numerals are used to refer to components common to FIG. 2, and the description will be omitted. FIG. 7 is a flowchart showing an operation of the image control system according to the first modification. The same reference numerals are used to refer to components common to FIG. 3, and the description will be omitted.

In the image control system according to the first modification, the camera 30 is directly connected to the PC 40. The controller 20 sends the control information to switch the first state and the second state to the PC 40 in the processing of S13.

The PC 40 receives the control information (S41). The PC 40 switches the state of the camera 30, based on the received control information (S42). The camera state, as described above, includes the first state in which the first image information is outputted and the second state in which the second image information is outputted.

In such a manner, the controller 20 may send the control information to the camera 30 through an information processing apparatus that receives a video signal of a camera.

### (Second Modification)

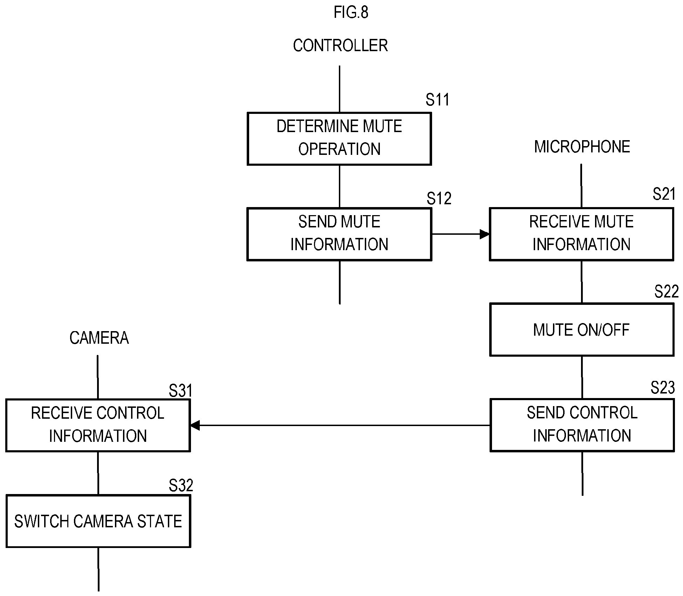

FIG. 8 is a flowchart showing an operation of an image control system according to a second modification. The same reference numerals are used to refer to components common to FIG. 3, and the description will be omitted. The controller 20 according to the second modification sends the control information to the camera 30 through the microphone 10.

Specifically, in the image control system according to the second modification, when the controller 20 sends the mute information to the microphone 10 in the processing of S12, the microphone 10 sends the control information to switch the first state and the second state to the camera 30 (S23).

In other words, in the second modification, the controller 20 does not send the control information to the camera 30 but sends the mute information to the microphone 10, which causes the microphone 10 to send the control information to the camera 30.

It is to be noted that, in a case in which the camera 30 receives the direction information on the voice of a talker that the microphone 10 obtains and performs the framing processing based on the direction information, the microphone 10 may stop sending the direction information when sending the control information to switch to the first state to the camera 30. As a result, in a case in which the camera 30 switches to the first state, a conflict between the framing processing to focus on a talker based on the direction information and the framing processing to capture the whole of the plurality of users is able to be prevented.

### (Third Modification)

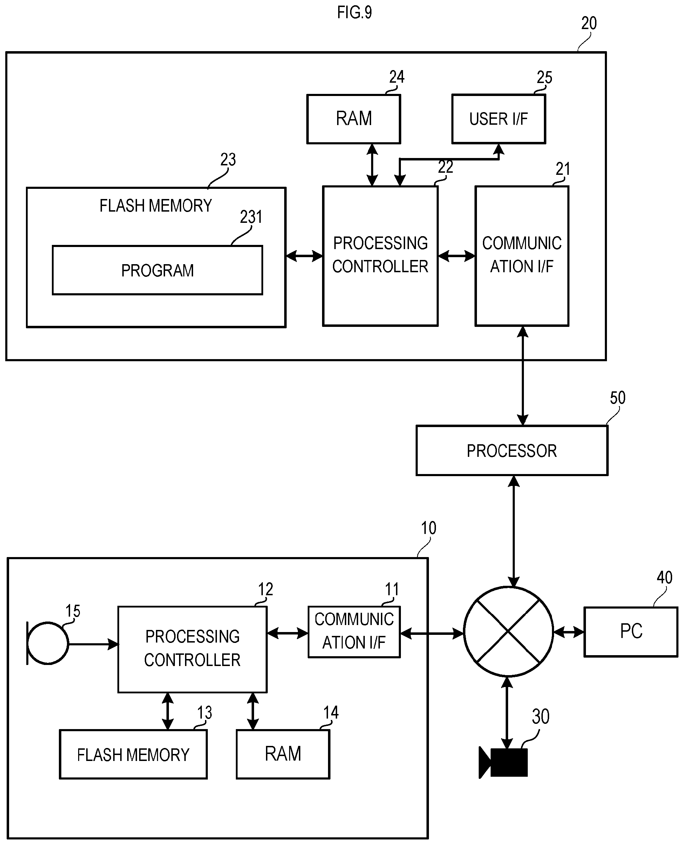

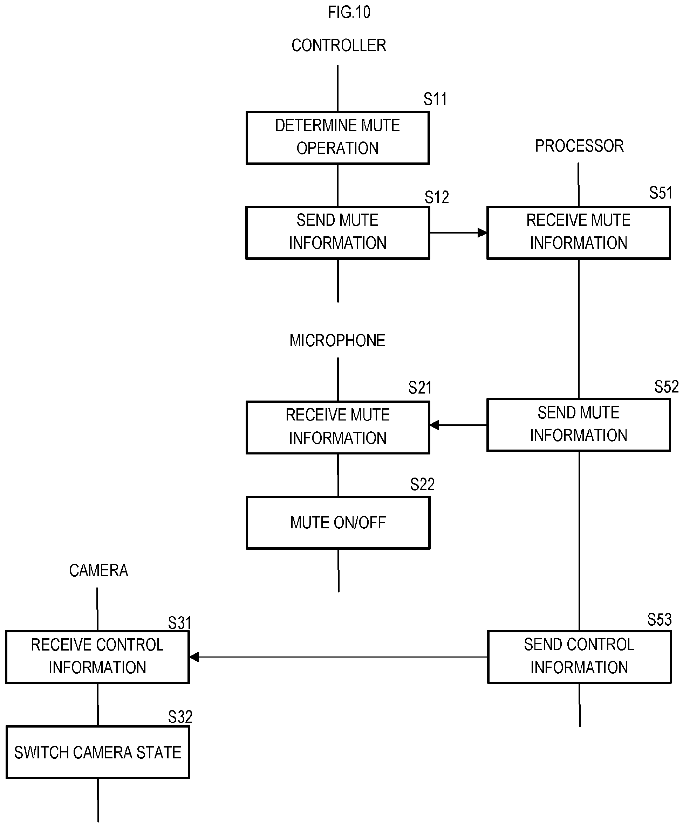

FIG. 9 is a block diagram showing a configuration of an image control system according to a third modification. The same reference numerals are used to refer to components common to FIG. 2, and the description will be omitted. FIG. 10 is a flowchart showing an operation of the image control system according to the third modification. The same reference numerals are used to refer to components common to FIG. 3, and the description will be omitted.

An image control system according to the third modification includes a processor 50. The processor 50 may be hardware (DSP: Digital Signal Processor) of signal processing. The processor 50 controls a device such as the microphone 10 connected to the image control system through the network, a not-shown speaker, or the camera 30, and performs signal processing such as routing, mixing, or effects, on a signal to be inputted into each device, or a signal to be outputted from each device.

The processor 50, from the microphone 10, may receive the audio signal obtained by the microphone unit 15, and may perform directivity processing of beamforming. Alternatively, the processor 50 may analyze the audio signal obtained from the plurality of microphones in the microphone unit 15 and estimate a voice arrival direction. Alternatively, the processor 50 may receive the video signal captured by the camera 30 and perform framing processing.

The controller 20 is directly connected to the processor 50. The controller 20 sends the mute information to the processor 50 in the processing of S12. The processor 50 receives the mute information (S51) and sends the mute information to the microphone 10 (S52). Then, the processor 50 sends the control information to switch the first state and the second state to the camera 30 (S53).

In such a manner, in a case in which the image control system includes the processor 50, the controller 20 may send the control information to the camera 30 through the processor 50.

### (Fourth Modification)

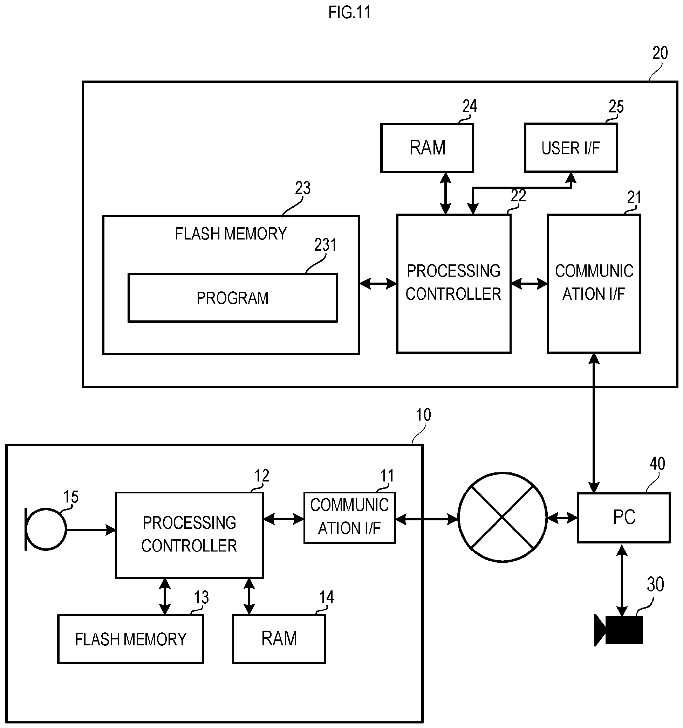

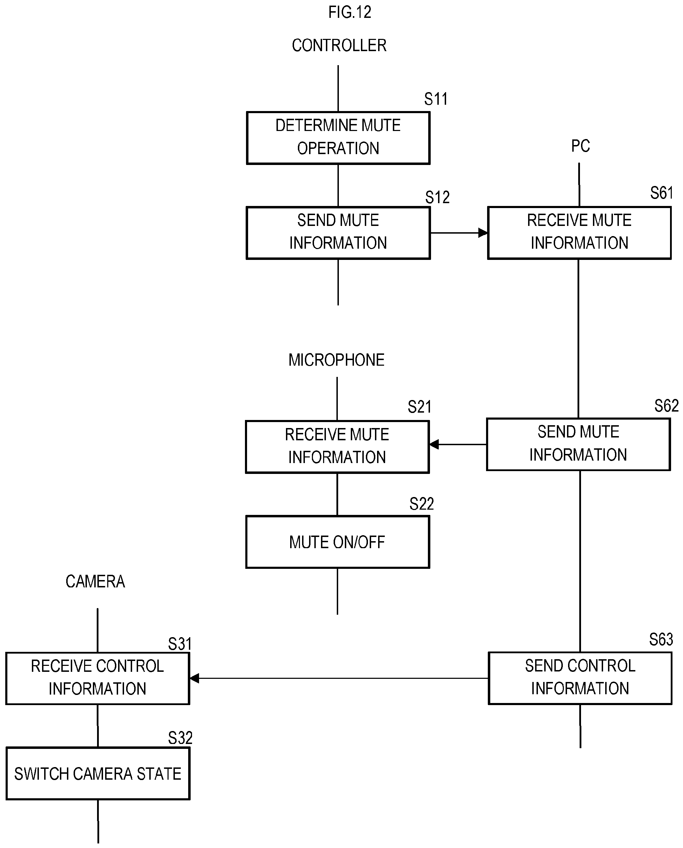

FIG. 11 is a block diagram showing a configuration of an image control system according to a fourth modification. The same reference numerals are used to refer to components common to FIG. 6, and the description will be omitted. FIG. 12 is a flowchart showing an operation of the image control system according to the fourth modification. The same reference numerals are used to refer to components common to FIG. 7, and the description will be omitted.

In the image control system according to the fourth modification, the camera 30 and the controller 20 are directly connected to the PC 40. The controller 20 sends the mute information to the PC 40 in the processing of S12.

The PC 40, when receiving the mute information (S61), sends the mute information to the microphone 10 (S62). Then, the PC 40 sends the control information to switch the first state and the second state, the camera 30 (S63).

In such a manner, the controller 20 may send the mute information to the microphone 10 through the PC 40 and send the control information to the camera 30.

The description of the foregoing embodiments is illustrative in all points and should not be construed to limit the present disclosure. The scope of the present disclosure is defined not by the foregoing embodiments but by the following claims. Further, the scope of the present disclosure is intended to include all modifications within the scopes of the claims and within the meanings and scopes of equivalents.

For example, each device including the processor 50 does not need to be connected through the network and may be connected by another communication line such as USB. Alternatively, each device including the processor 50 may be connected by wireless such as wireless LAN or Bluetooth (registered trademark).

## Claims

1. An image control method comprising:
determining a mute operation;
sending, to a camera (30), control information to switch a first state and a second state based on the determination result; and
causing the camera (30) to output first image information in the first state and output second image information in the second state based on the control information.

2. The image control method according to claim 1,
wherein the mute operation includes a mute-on operation and a mute-off operation,
wherein the method comprises:
in response to the mute-on operation being determined, sending the control information to switch to the first state to the camera (30); and
in response to the mute-off operation being determined, sending the control information to switch to the second state to the camera (30),
wherein the first state corresponds to a predefined reference state, and
the first image information includes an image corresponding to the reference state.

3. The image control method according to claim 2, wherein the reference state corresponds to a state of capturing a whole of a plurality of users or focusing on an image of a specific user.

4. The image control method according to claim 3, wherein:
the second state corresponds to a state of focusing on an image of a talker, and
the second image information includes the image focusing on the talker.

5. The image control method according to any one of claims 1 to 4, comprising:
sending the control information to the camera (30) through a processor (50) that receives a video signal from the camera (30) .

6. The image control method according to any one of claims 1 to 4, comprising:
sending the control information to the camera (30) through an information processing apparatus (40) that receives a video signal from the camera (30).

7. The image control method according to any one of claims 1 to 4, comprising:
sending mute information to a microphone, based on the determination result.

8. The image control method according to claim 7, comprising:
sending the control information to the camera (30) through the microphone.

9. The image control method according to claim 7, comprising:
obtaining, by the microphone, direction information on a voice of a talker, and sending, by the microphone, the direction information to the camera (30); and
focusing, by the camera (30), on an image of the talker, based on the direction information.

10. The image control method according to any one of claims 1 to 4, comprising:
displaying the obtained first image information or second image information on a display.

11. An image control apparatus (20) comprising:
a processing controller (12) configured to:
determine a mute operation;
send, to a camera (30), control information to switch a first state and a second state based on the determination result; and
cause the camera (30) to output first image information in the first state and output second image information in the second state based on the control information.

12. The image control apparatus (20) according to claim 11,
wherein the mute operation includes a mute-on operation and a mute-off operation,
wherein the processing controller (12) is configured to:
in response to determining the mute-on operation, send the control information to switch to the first state to the camera (30); and
in response to determining the mute-off operation, send the control information to switch to the second state to the camera (30), wherein the first state corresponds to a predefined reference state and
the first image information includes an image corresponding to the reference state.

13. The image control apparatus (20) according to claim 12, wherein the reference state corresponds to a state of capturing a whole of a plurality of users or focusing on an image of a specific user.

14. The image control apparatus (20) according to claim 13, wherein:
the second state corresponds to a state of focusing on an image of a talker; and
the second image information includes the image focusing on the talker.

15. A non-transitory computer-readable storage medium storing a program that causes an information processing apparatus (40) to execute processing comprising:
determining a mute operation;
sending, to a camera (30), control information to switch a first state and a second state based on the determination result; and
causing the camera (30) to output first image information in the first state and output second image information in the second state based on the control information.
